# EUROPÄISCHE PATENTSCHRIFT

(11) **EP 1 923 790 B1**
(45) Veröffentlichungstag und Bekanntmachung des Hinweises auf die Patenterteilung: **06.09.2017**
(21) Anmeldenummer: 07021021.6
(22) Anmeldetag: 26.10.2007
(51) Int. Cl.: G06F 11/07, G06F 9/445, G07F 7/10, G06Q 20/32, G06Q 20/34

(54) **Kompatibilitätsprüfung in einem portablen Datenträger**
Compatibility test in a portable data storage medium
Contrôle de compatibilité dans un support de données portable

(30) Priorität: 31.10.2006 DE 102006051336
(43) Veröffentlichungstag der Anmeldung: 21.05.2008
(73) Patentinhaber: Giesecke+Devrient Mobile Security GmbH, 81677 München (DE)
(72) Erfinder: Rankl, Wolfgang, 81825 München (DE)

(56) Entgegenhaltungen:
- WO-A-98/02834
- WO-A-98/59325
- US-A1- 2005 251 593
- US-A1- 2006 053 244
- HILLER: "Software Fault Tolerance Techniques from a Real-Time Systems Point of View" TECHNICAL REPORT DEPARTMENT OF COMPUTER ENGINEERING CHALMERSUNIVERSITY OF TECHNOLOGY GOTEBORG, XX, XX, Nr. 98-16, 1. November 1998 (1998-11-01), Seite complete, XP002213417

## Beschreibung

Die vorliegende Erfindung betrifft ein Verfahren zum Ausführen einer Funktion eines portablen Datenträgers im Rahmen eines Einsatzes des Datenträgers in einer bestimmten Einsatzumgebung sowie einen derartigen portablen Datenträger.

Portable Datenträger, wie z. B. Chipkarten, Smart Cards, Mobilfunkkarten, sichere Multimediakarten und dergleichen werden häufig in heterogenen Umgebungen eingesetzt und müssen deshalb über eine besondere Robustheit im Hinblick auf z. B. unterschiedliche Übertragungsprotokolle, Übertragungsgeschwindigkeiten und sonstige technische Gegebenheiten von typischen Einsatzumgebung des Datenträgers verfügen. Insbesondere ist es wünschenswert, dass sich ein portabler Datenträger an wechselnde Kommunikationen mit verschiedenen externen Kommunikationsvorrichtungen anpassen kann, die üblicherweise die Hauptkomponente einer Einsatzumgebung des Datenträgers bilden, damit dessen Funktionen zuverlässig die gewünschten Ergebnisse erzielen.

In einem speziellen Kontext wird eine vergleichbare Anforderung z. B. von in Deutschland gebräuchlichen Telefonkarten erfüllt, indem diese auf ein von dem Kartentelefon vorgegebenes Kommunikationsprotokoll (T =1 oder T = 14) mit einem Neustart (bzw. "Warmstart") und Umschalten des Protokolls reagieren. Die DE 10 2004 014 885 A1 offenbart darüber hinaus ein Verfahren zum Optimieren von ausführbaren Programmen eines tragbaren Datenträgers mittels eines Diagnoseelements, das während einer Ausführung der Programme statistische Daten sammelt, die zur Optimierung des Ressourcenverbrauchs verwendet werden. Derartige Ansätze sind jedoch zur automatischen Anpassung von portablen Datenträgern an wechselnde Einsatzumgebungen nicht praktikable bzw. nicht geeignet.

US 2006/0053244 A1 beschreibt eine USB-Einheit, welche beim Starten der Einheit eine von mehreren möglichen USB-Modi auswählt. Die Speicherkarte aus US 2005/0251593 A1 erkennt ein auf einer Schnittstelle anliegendes Protokoll und wählt das entsprechende Protokoll von mehreren möglichen Protokollen aus.

In dem Artikel "Software Fault-Tolerant Techniques for Real-Time System Point of View" von Martin Hiller wird ein "Recovery Block"-Konzept beschrieben, in welchem der Systemzustand gesichert wird, bevor ein Software-Modul aufgerufen wird, für welches im Fehlerfall alternative Module aufrufbar sind.

In die Chipkarte aus WO 98/02834 A1 sind für das jeweilige Land benötigte Anwendungsprogramme nachladbar, die durch einen Interpreter der Chipkarte ausführbar sind.

WO 98/59325 A2 verwendet eine Sprungtabelle im ROM, die auf ROM-Routinen verweist, und eine modifizierte Sprungtabelle im EEPROM, die auf gegebenenfalls vorhandene Ersatz-Routinen im EEPROM verweist, um das gleiche ROM für Chipkarten mit unterschiedlichen Anwendungen nutzen zu können.

Demzufolge ist es die Aufgabe der vorliegenden Erfindung, einen flexiblen und robusten Einsatz von portablen Datenträgern in wechselnden Einsatzumgebungen zu ermöglichen.

Diese Aufgabe wird erfindungsgemäß durch ein Verfahren sowie einen Datenträger mit den Merkmalen der unabhängigen Ansprüche gelöst. Die davon abhängigen Ansprüche beschreiben vorteilhafte Ausgestaltungen und Weiterbildungen der Erfindung.

Erfindungsgemäß wird eine von einem Prozessor ausführbare Funktion eines portablen Datenträgers auf ihre Kompatibilität mit einer bestimmten Einsatzumgebung geprüft, in welcher der Datenträger von dem Benutzer eingesetzt wird. Falls eine Inkompatibilität der Funktion mit der betreffenden Einsatzumgebung festgestellt wird, wird eine Inkompatibilitätsroutine des Datenträgers anstelle der Funktion aufgerufen, um in der vorliegenden Einsatzumgebung die mit der Ausführung der Funktion beabsichtigte oder eine alternative Wirkung zu erzielen. Falls die Funktion mit der Einsatzumgebung kompatibel ist, wird sie regulär ausgeführt bzw. ihr Funktionsergebnis wird übernommen.

Hierdurch wird ermöglicht, einen portablen Datenträger in heterogenen Einsatzumgebungen mit einem deutlich reduzierten bzw. nicht vorhandenen Fehlerrisiko im Hinblick auf Inkompatibilitäten einzusetzen. Die flexible Behandlung einer Inkompatibilität durch eine auf die Funktion und die betreffende Einsatzumgebung abgestimmte Inkompatibilitätsroutine wird durch ein individuelles Reagieren auf sich verändernde technische Gegebenheiten erreicht. Außerdem wird die Interaktion eines portablen Datenträgers mit einer externen Kommunikationsvorrichtung ermöglicht, die zumindest teilweise die betreffende Einsatzumgebung repräsentiert. Insbesondere kann die erfindungsgemäße Technologie verwendet werden, um neue Funktionen auf einem portablen Datenträger zu implementieren, von denen im Voraus angenommen werden kann, dass sie mit bestimmten Einsatzumgebungen des Datenträgers inkompatibel sind, indem gleichzeitig eine diese Inkompatibilität kompensierende Inkompatibilitätsroutine bereitgestellt wird. Daraus ergibt sich für Hersteller und Herausgeber von portablen Datenträgern eine praktikable Migrationsmöglichkeit bei der Umstellung, Aktualisierung oder Portierung von Softwaremodulen und Funktionen. Auch hat die vorliegende Erfindung eine deutlich erhöhte Robustheit beim Einsatz von portablen Datenträgern zur Folge, ohne dass Adaptionen an bestimmten Einsatzumgebungen oder Änderungen an zentralen Systemkomponenten des Datenträgers notwendig sind.

Beispiele für Einsatzumgebungen, in denen portable Datenträger üblicherweise eingesetzt werden, sind z.B. Geldautomaten, Fahrkartenautomaten, Mobiltelefone, Computer, Notebooks sowie beliebige andere elektronische Kommunikationsvorrichtungen, die mit portablen Datenträgern, wie z. B. Chipkarten, Mobilfunkkarten, sicheren Multimediakarten und dergleichen, eine Dantekommunikation durchführen können.

Ein erfindungsgemäßer portabler Datenträger umfasst zur Interaktion und Datenkommunikation mit einer externen Datenkommunikationsvorrichtung bei einem Einsatz des Datenträgers in einer bestimmten Einsatzumgebung eine Datenkommunikationsschnittstelle, sowie einen Speicher und einen Prozessor zum Speichern und Ausführen von Funktionen des Datenträgers, die im Rahmen des Einsatzes in der Einsatzumgebung aufgerufen werden. Eine spezielle Kompatibilitätseinrichtung führt die oben beschriebene Kompatibilitätsprüfung einer auszuführenden Funktion durch und ruft gegebenenfalls eine zugehörige Inkompatibilitätsroutine auf, die ebenfalls im Speicher des Datenträgers abgelegt ist und von dem Prozessor ausgeführt wird.

Die Kompatibilitätseinrichtung kann prinzipiell in jeder beliebigen Form auf dem Datenträger implementiert sein, beispielsweise als Sicherheitsapplikation, die vor einer Ausführung einer Funktion eine Kompatibilitätsprüfung durchführt, oder in Form eines auf dem Datenträger vorliegenden separaten integrierten Schaltkreises. Vorzugsweise ist die Kompatibilitätseinrichtung jedoch als zentrale Kompatibilitätsschicht eines Betriebssystems des Datenträgers ausgestaltet, die funktional zwischen dem Betriebssystem und den auszuführenden Applikationen bzw. Funktionen angeordnet ist und für jede aufgerufene Funktion eine Kompatibilitätsprüfung durchführt. Zusätzlich kann die Kompatibilitätseinrichtung vor der eigentlichen Kompatibilitätsprüfung ermitteln, ob diese überhaupt notwendig ist. So kann beispielsweise auf eine Kompatibilitätsprüfung verzichtet werden, wenn eine auszuführende Funktion nicht mit der betreffenden Einsatzumgebung in Wechselwirkung tritt und bezüglich des Datenträgers keine Außenwirkung entfaltet.

Die eigentliche Kompatibilitätsprüfung wird durchgeführt, indem die zu überprüfende Funktion aufgerufen und ein Funktionsergebnis in Abhängigkeit von der betreffenden Einsatzumgebung des Datenträgers erzeugt wird. Anhand des dann vorliegenden Funktionsergebnisses kann die Kompatibilitätseinrichtung eine Inkompatibilität der Funktion mit der Einsatzumgebung feststellen, beispielsweise dadurch, dass das Funktionsergebnis eine Fehlermeldung oder ein anderes als das übliche und/ oder erwünschte und/ oder erwartete Funktionsergebnis repräsentiert. Die Kompatibilitätsprüfung wird also vorzugsweise dadurch durchgeführt, dass die zu prüfende Funktion regulär in der Einsatzumgebung ausgeführt wird und deren Funktionsergebnis vor der Weiterverarbeitung durch den Datenträger von der Kompatibilitätseinrichtung auf Kompatibilität mit der Einsatzumgebung überprüft wird.

Sofern eine Inkompatibilität einer aufgerufenen Funktion festgestellt wird, wird eine in dem Speicher des Datenträgers vorliegende Inkompatibilitätsroutine ermittelt, indem zunächst Informationen über die betreffende Einsatzumgebung beschafft werden, bezüglich der die Inkompatibilität festgestellt wurde. Basierend auf diesen ermittelten Informationen wird dann abhängig von der inkompatiblen Funktion und von der vorliegenden Einsatzumgebung eine Inkompatibilitätsroutine ermittelt. Die von der Kompatibilitätseinrichtung ermittelten Informationen über die Einsatzumgebung umfassen insbesondere eine Identifikation der externen Datenkommunikationsvorrichtung, mit der der Datenträger beim Ausführen der inkompatiblen Funktion in Interaktion steht bzw. mit der er eine Datenkommunikationsverbindung unterhält. Derartige Informationen können beispielsweise Datenkommunikationsprotokolle, Datenübertragungsgeschwindigkeiten oder eine Betriebsystem- und/ oder Softwareausstattung der Datenkommunikationsvorrichtung betreffen, aber auch technische Informationen über ein hinter der Datenkommunikationsvorrichtung stehendes Netzwerk oder über eine größere technische Infrastruktur, deren Teil die Datenkommunikationsvorrichtung ist. Insbesondere umfassen die Informationen über die Einsatzumgebung alle Merkmale einer externen Datenkommunikationsvorrichtung, die die Ausführung einer Funktion des Datenträgers in Interaktion mit der Datenkommunikationsvorrichtung beeinflussen können oder von denen das Funktionsergebnis abhängen kann.

Der portable Datenträger umfasst in dem Speicher eine Regeldatenbank mit Regeln, die ein bestimmtes Verhalten des Datenträgers im Falle einer Inkompatibilität vorgeben. Diese Regeln stellen eine Verknüpfung zwischen den regulären Funktionen des Datenträgers und zugehörigen Inkompatibilitätsroutinen her, die bei einer Inkompatibilität der betreffenden Funktion von der Kompatibilitätseinrichtung aufgerufen werden. Da eine Inkompatibilitätsroutine von der betreffenden Einsatzumgebung abhängig ist, mit der eine bestimmte Funktion des Datenträgers inkompatibel ist, berücksichtigen die Regeln der Regeldatenbank beim Abbilden einer inkompatiblen Funktion auf eine Inkompatibilitätsroutine insbesondere auch die Einsatzumgebung.

Diese Regeldatenbank bzw. deren Regeln müssen nicht als starres, unveränderliches Regelsystem ausgestaltet sein, sondern können adaptierbar und/ oder lernend sein, indem z. B. die Kompatibilitätseinrichtung die Ergebnisse einzelner Kompatibilitätsprüfungen in das Regelsystem durch Anpassen bestehender Regeln oder Ergänzen von neuen Regeln integriert. Dadurch, dass die Kompatibilitätseinrichtung die Regeldatenbank regelmäßig mit Erkenntnissen über die Kompatibilität von Funktionen mit bestimmten Einsatzumgebungen aktualisiert, ist es möglich, dass die für eine bestimmte Einsatzumgebung am besten geeignete Inkompatibilitätsroutine schnell und zuverlässig ermittelt werden kann. Ebenso ist es möglich, dass ein privilegierter Wartungszugang zur der Regeldatenbank von außen über die Datenkommunikationsschnittstelle des Datenträgers besteht, z. B. durch einen Herausgeber oder Hersteller des Datenträgers, um die Regeln bei Bedarf anzupassen oder zu aktualisieren.

Portable Datenträger, wie z. B. Chipkarten oder Mobilfunkkarten, umfassen üblicherweise eine Vielzahl von Funktionen, deren Ausführung von zumindest einem Funktionsparameter abhängig ist. Als Inkompatibilitätsroutinen können Alternativfunktionen der inkompatiblen Funktion eingesetzt werden, die in der betreffenden Einsatzumgebung diejenige Wirkung erzielen, die ursprünglich mit dem Ausführen der inkompatiblen Funktion angestrebt wurde. Eine derartige Alternativfunktion kann bei einer parametrierten Funktion beispielsweise darin bestehen, dass anstelle eines verwendeten Funktionsparameters ein Alternativfunktionsparameter ausgewählt wird, der auf die vorliegende Einsatzumgebung abgestimmt ist. So ist es beispielsweise möglich, dass ein Funktionsparameter ein bestimmtes Datenkommunikationsprotokoll oder eine Übertragungsgeschwindigkeit betrifft, während ein Alternativfunktionsparameter ein anderes Datenkommunikationsprotokoll oder eine geringere oder höhere Übertragungsgeschwindigkeit angibt.

Weitere Merkmale und Vorteile der Erfindung ergeben sich aus der folgenden Beschreibung verschiedener erfindungsgemäßer Ausführungsbeispiele sowie weiterer Ausführungsalternativen im Zusammenhang mit den begleitenden Zeichnungen. Darin zeigen:
- Fig.1: eine Chipkarte mit einer erfindungsgemäßen Kompatibilitätseinrichtung;
- Fig. 2: eine Darstellung eines Verfahrensablaufs zum Prüfen der Kompatibilität einer Funktion mit einer Einsatzumgebung; und
- Fig. 3: eine Darstellung eines Funktionsaufrufs gemäß dem Stand der Technik.

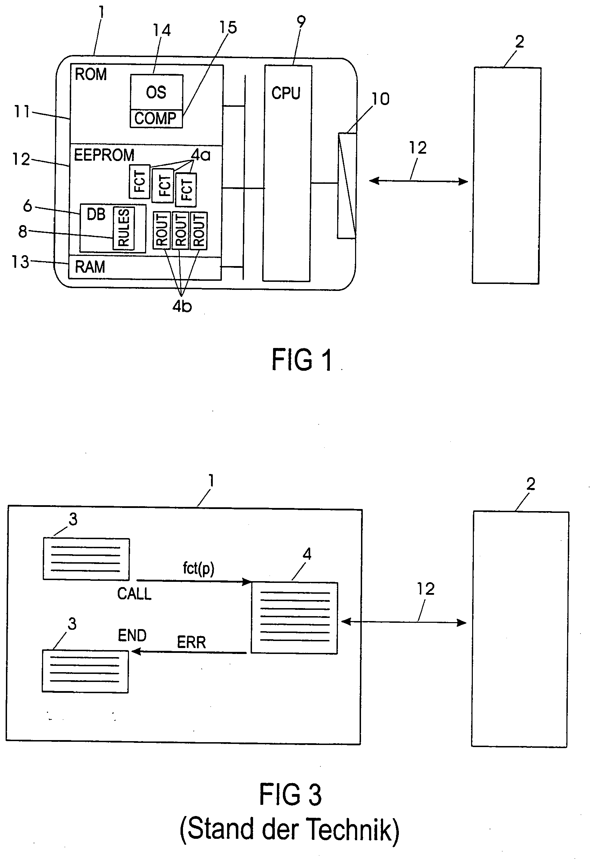

Herkömmliche portable Datenträger, wie z. B. die in Fig.1 dargestellte Chipkarte 1, sind zumeist mit einem Prozessor 9 (CPU) ausgestattet, der bei einem Einsatz der Chipkarte 1 Funktionen 4a (FCT) ausführt, um bestimmte Dienstleistungen der Chipkarte 1 mittels einer Datenkommunikation 12 mit einer externen Datenkommunikationsvorrichtung 2 bereitzustellen. Zur Steuerung der Chipkarte 1 umfasst diese ein Betriebssystem 14 (OS), das in einem permanenten ROM-Speicher 11 abgelegt ist, während die Funktionen 4a sowohl in dem ROM-Speicher 11, z. B. als Teil des Betriebssystems 14 oder als Systemkomponenten, oder in einem nicht-flüchtigen Flash- oder EEPROM-Speicher 14 als Applikationsfunktionen oder in Form von Bibliotheksfunktionen abgelegt sein können.

Die Ausführung einer Funktion 4a durch den Prozessor 9 erfordert in der Regel eine Interaktion bzw. Datenkommunikation 12 zwischen der Chipkarte 1 und der externen Datenkommunikationsvorrichtung 2 über eine Datenkommunikationsschnittstelle 10. Derartige Funktionen 4a werden beispielsweise im Rahmen von Anwendungen einer als (U)SIM-Mobilfunkkarte ausgestalteten Chipkarte 1 in Interaktion mit einem Telekommunikationsendgerät, z. B. einem Mobiltelefon, durchgeführt, mit dem die Mobilfunkkarte in Kontakt steht. Die erfolgreiche Ausführung einer Funktion 4a basiert insbesondere auf einer Wechselwirkung mit der externen Kommunikationsvorrichtung 2, da die Funktion 4a z. B. bestimmte weitere Funktionen in der Datenkommunikationsvorrichtung 2 aufrufen, Daten abfragen oder sonstige Wirkungen außerhalb des Datenträgers 1 hervorrufen kann.

Bei der Vielzahl von Funktionen 4a, die in modernen Chipkarten 1 vorhanden sind, ist jedoch nicht immer garantiert, dass diese Funktionen 4a mit der Vielzahl von verschiedenen Einsatzumgebungen 2 kompatibel sind und in Interaktion mit der jeweiligen Einsatzumgebung 2 die gewünschten Ergebnisse erzielen. Portable Datenträger, wie z. B. Chipkarten 1, die Dienstleistungen von Dienstleistungsunternehmen, wie z. B. Banken oder dergleichen, bereitstellen, kommen mit vielen verschiedenen Kommunikationsvorrichtungen 2 in Kontakt, die mitunter unterschiedlichste technische Ausgestaltungen aufweisen - d. h. verschiedene Einsatzumgebungen 2 der Chipkarte 1 repräsentieren. Um zu ermöglichen, dass in solchen heterogenen Umgebungen Funktionen 4a dennoch zu dem gewünschten Erfolg führen, umfasst die Chipkarte 1 eine Kompatibilitätseinrichtung 15 (COMP), die bei einem Aufruf einer Funktion 4a deren Kompatibilität mit der betreffenden Einsatzumgebung 2 prüft. Die Kompatibilitätsvorrichtung 15 ist hierbei vorzugsweise als Schicht des Betriebssystems 14 der Chipkarte 1 bzw. als Betriebssystemerweiterung oder -komponente ausgestaltet, die bezüglich ihrer Priorität zwischen dem Betriebssystem 14 und weiteren Applikations-, Bibliotheks- und sonstigen Funktionen 4a angeordnet ist. Diese Kompatibilitätseinrichtung 15 prüft die Kompatibilität einer auszuführenden Funktion 4a mit der Einsatzumgebung 2 und ruft bei einer festgestellten Inkompatibilität eine für diesen Fall vorgesehene Inkompatibilitätsroutine 4b (ROUT) auf, die anstelle der inkompatiblen Funktion 4a ausgeführt wird.

Eine Inkompatibilitätsroutine 4b der Funktionen 4a liegt vorzugsweise im EEPROM-Speicher 12 der Chipkarte 1 und wird über Regeln 8 (RULES) in Abhängigkeit von der jeweiligen inkompatiblen Funktion 4a und der ermittelten Einsatzumgebung 2 aufgerufen. Die Regeln 8 repräsentieren ein differenziertes Regelsystem zur Inkompatibilitäts- und Fehlerbehandlung durch die Kompatibilitätseinrichtung 15. Die Regeln 8 sind vorzugsweise in einer Regeldatenbank 6 (DB) zusammengefasst, die ebenfalls im EEPROM-Speicher 12 abgelegt ist.

Die Aktualisierung der Regeldatenbank 6 und die Anpassung der Regeln 8 an neue Erkenntnisse über die Kompatibilität bestimmter Funktionen 4a mit bestimmten Einsatzumgebungen 2 kann von der Kompatibilitätseinrichtung 15 durchgeführt werden, indem die Ergebnisse jeder Kompatibilitätsprüfung in Form von neuen oder aktualisierten Regeln 8 in der Regeldatenbank 6 niedergelegt werden. Dadurch muss für eine bestimmte Einsatzumgebung eine anstelle einer inkompatiblen Funktion 4a aufzurufende Inkompatibilitätsroutine 4b nur einmal ermittelt werden und ist danach über eine Abfrage der Regeldatenbank 6 verfügbar.

In einer einfachen Ausgestaltung wird die Regeldatenbank durch eine Liste von alternativen Funktionsaufrufen gebildet. Zu einer auszuführenden Funktion können nacheinander die in der Liste enthaltenen Funktionsaufrufe geprüft werden, bis ein kompatibler Funktionsaufruf erkannt wird. Eine Zuordnung der Funktionsaufrufe zu Einsatzumgebungen ist nicht zwingend erforderlich.

In der Liste kann auch einfach der jeweils aktuell zu verwendende Funktionsaufruf markiert werden. Alternativ kann aber auch - beispielsweise bei Verwendung von Sprungtabellen für Funktionsaufrufe - eine separate Liste (Sprungtabelle) für die aktuell zu verwendenden Funktionsaufrufe verwendet werden. Der alternative Funktionsaufruf wird dann unmittelbar als neuer Funktionsaufruf gespeichert. Die Liste wird sich nach einer erstmaligen Verwendung in einer Einsatzumgebung bzw. einem Wechsel der Einsatzumgebung aktualisieren.

Darüber hinaus ist es möglich, dass die Regeldatenbank 6 oder eine entsprechende Liste von außen über einen privilegierten Wartungszugang (nicht dargestellt) aktualisiert und angepasst werden kann, z. B. von einem Herausgeber oder Hersteller der Chipkarte 1. Im Mobilfunksektor ist dies beispielsweise über die Luftschnittstelle eines Mobiltelefons möglich, über die direkt auf den EEPROM-Speicher 12 mit der Regeldatenbank 6 zugegriffen werden kann. Bei fest installierten Terminals, z. B. Bank- oder Fahrkartenautomaten, kann die Regeldatenbank 6 durch eine entsprechende Kommunikation mit einem Hintergrundsystem eines Betreibers der Terminals aktualisiert werden. So können beispielsweise auch bestimmte Funktionen der Chipkarte 1 in Abhängigkeit von dem Typ des Terminals ein- oder ausgeschaltet werden.

Fig. 3 zeigt den Aufruf einer Funktion 4 im Rahmen der Abarbeitung eines Programms 3 in einem portablen Datenträger 1 gemäß dem Stand der Technik. Der portable Datenträger 1 steht in Kontakt mit einer externen Datenkommunikationsvorrichtung 2. Bei der Abarbeitung des Programms 3 durch den Prozessor 9 der Chipkarte 1 wird an einem bestimmten Punkt eine parametrierte Bibliotheks- oder Applikationsfunktion 4 *fct(p)* aufgerufen (CALL). Die Funktion 4 ist abhängig von dem Funktionsparameter *p*, der beispielsweise von der Funktion zu verarbeitende Eingabedaten repräsentiert oder eine bestimmte Variante der Funktion *fct(p)* spezifiziert. Nach dem Aufruf führte die Funktion 4 eine Datenkommunikation 12 mit der Datenkommunikationsvorrichtung 2 durch, beispielsweise werden Daten zwischen dem Datenträger 1 und der Datenkommunikationsvorrichtung 2 ausgetauscht oder abgefragt. Falls die Funktion 4 nicht mit der durch die Datenkommunikationsvorrichtung 2 repräsentierten Einsatzumgebung kompatibel ist, beispielsweise weil der Datenträger 1 ein bestimmtes Datenkommunikationsprotokoll verwendet, das die Datenkommunikationsvorrichtung 2 nicht unterstützt, kommt es zu einer Fehlermeldung (ERR) als Rückgabewert an das Hauptprogramm 3, da die Funktion 4 nicht ordnungsgemäß beendet werden kann. Die Funktion 4 wird dann abgebrochen (END).

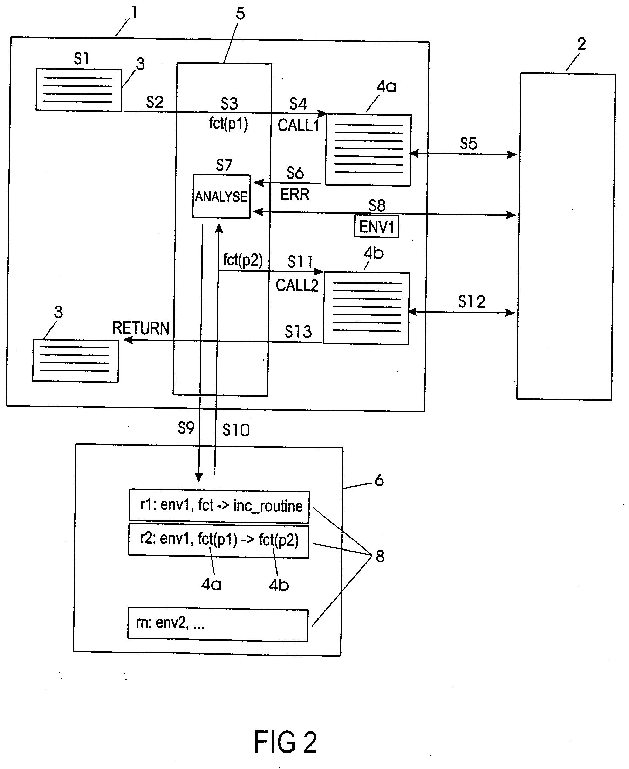

Demgegenüber zeigt Fig. 2 eine schrittweise Kompatibilitätsprüfung durch eine Kompatibilitätseinrichtung 15 einer Chipkarte 1 gemäß der vorliegenden Erfindung. Beginnend mit Schritt S1 wird ein Hauptprogramm 3 gestartet, z.B. durch das Betriebssystem 14 der Chipkarte 1. In Schritt S2 ruft das Hauptprogramm 3 die *Funktion fct(p1)* 4a auf. Dieser Aufruf wird an die Kompatibilitätseinrichtung 15 weitergeleitet bzw. von dieser registriert. In Schritt S3 prüft die Kompatibilitätseinrichtung 15, ob es sich bei der *Funktion fct(p1)* 4a um eine Funktion handelt, die eine Interaktion mit der Einsatzumgebung 2 durchführt und deshalb mit dieser kompatibel sein muss. Falls dies der Fall ist, ist eine Kompatibilitätsprüfung der aufgerufenen *Funktion fct(p1)* 4a durchzuführen. In Schritt S4 wird die Funktion *fct(p1)* 4a schließlich aufgerufen (CALL1), was in Schritt S5 eine Wechselwirkung bzw. Datenkommunikation zwischen der aufgerufenen Funktion 4a und der Einsatzumgebung 2 der Chipkarte 1 zur Folge hat. Die Einsatzumgebung wird dabei im wesentlichen durch die Datenkommunikationsvorrichtung 2 repräsentiert, kann aber auch weitere Vorrichtungen umfassen, deren technische Merkmal einen Einfluss auf die Ausführung der Funktion *fct(p1)* 4a haben können, z. B. ein Netzwerk, Hintergrundsystem, nachgeordnete Datenbanken und dergleichen. In Schritt S6 wird das Funktionsergebnis der Funktion *fct(p1)* 4a zurückgegeben, so dass die Kompatibilitätsvorrichtung 15 in Schritt S7 anhand des Funktionsergebnisses überprüfen kann, ob die Funktion *fct(p1)* 4a mit der Einsatzumgebung 2 kompatibel ist (ANAYSE).

Falls das Funktionsergebnis nicht dem üblichen und/ oder erwarteten Funktionsergebnis der Funktion *fct(p1)* 4a entspricht, bzw. falls es sich bei dem Funktionsergebnis um eine Fehlermeldung (ERR) handelt, liegt eine Inkompatibilität der Funktion 4a mit der Einsatzumgebung 2 vor und die Kompatibilitätseinrichtung 15 fragt in Schritt S9 die Regeln 8 der Regeldatenbank 6 nach einer Inkompatibilitätsroutine zu der inkompatiblen Funktion *fct(p1)* 4a ab. Da die Auswahl einer Inkompatibilitätsroutine 4b nicht nur von der inkompatiblen Funktion 4a sondern auch von der Einsatzumgebung 2 abhängt, ermittelt die Kompatibilitätseinrichtung 15 vorher in Schritt S8 Informationen (ENV1) über die Einsatzumgebung 2, die z.B. diejenigen technische Merkmale und Gegebenheiten der Kommunikationsvorrichtung 2 umfassen, von denen die Ausführung der Funktion 4a abhängt. Die in der Regeldatenbank 6 niedergelegten Regeln *r1, r2* bis *rn* bilden inkompatible Funktionen 4a [*fcf*, *fct(p1)*] in Abhängigkeit von der jeweils ermittelten Einsatzumgebung 2 [*env1, env*2] auf zugehörige Inkompatibilitätsroutinen 4b [*inc_routine, fct(p2)*] ab, die eine mit der Einsatzumgebung 2 kompatible Weiterverarbeitung gewährleisten. Im vorliegenden Fall trifft die Regel *r2* zu, die für den Fall, dass die durch den Funktionsparameter *p1* spezifizierte Funktion *fct(p1)* inkompatibel mit der in Schritt S8 ermittelten Einsatzumgebung 2 (*env1*) ist, die Alternativfunktion *fct*(*p2*) 4b vorschlägt, die von dem Alternativparameter p2 abhängig ist.

Die so ermittelte Alternativfunktion *fct(p2)* 4b wird dann von der Kompatibilitätseinrichtung 15 anstelle der inkompatiblen Funktion 4a in Schritt S11 aufgerufen und ausgeführt (CALL2). Die Alternativfunktion *fct(p2)* hat ebenso wie die inkompatible Funktion *fct(p1)* 4a eine Interaktion S12 mit der Einsatzumgebung/Datenkommunikationsvorrichtung 2 zur Folge und liefert in Schritt S13 ein Funktionsergebnis an die Kompatibilitätseinrichtung 15 und weiter an das Hauptprogramm 3 zurück, das nunmehr ordnungsgemäß fortfahren kann.

Abschließend werden drei beispielhafte Anwendungsfälle des oben erläuterten Verfahrens im Zusammenhang mit einer (U)SIM-Mobilfunkkarte als portablem Datenträger 1 beschrieben. (U)SIM-Mobilfunkkarten 1 nutzen zur Datenkommunikation 12 mit einem Mobiltelefon, das die Einsatzumgebung 2 der Mobilfunkkarte 1 repräsentiert, zumeist das Übertragungsprotokoll T=1. Gegenwärtig haben Mobiltelefone 2 jedoch häufig fehlerhafte Implementierungen des Übertragungsprotokolls, so dass das Protokoll T=1 nicht immer problemlos eingesetzt werden kann, obwohl es gegenüber dem Alternativprotokoll T=0 Vorteile besitzt. Um die Inkompatibilität einer Funktion 4a zu kompensieren, die sich auf das Übertragungsprotokoll T=1 stützt, kann eine in der Regeldatenbank 6 niedergelegte Regel 8 beispielsweise angeben, dass bei einer Inkompatibilität des Protokolls T=1 bezüglich eines bestimmten Mobiltelefons 2, eine Alternativfunktion 4b verwendet wird, die sich auf das Übertragungsprotokoll T=0 stützt.

Des Weiteren werden im Mobilfunkbereich zur Datenkommunikation zumeist Teiler bis 8 benutzt. Je nach der Ausgestaltung des Mobiltelefons 2 kann der Teiler 8, der eine vergleichsweise hohe Übertragungsgeschwindigkeit zur Folge hat, nicht zuverlässig eingesetzt werden, so dass eine Funktion 4a mit dem Teiler 8 inkompatibel mit dem betreffenden Mobiltelefon 2 sein kann. In diesem Fall kann die Kompatibilitätseinrichtung 15 der Regeldatenbank 6 eine Regel 8 entnehmen, die angibt, dass eine auszuführende Funktion 4a anfänglich einen Teiler 8 verwendet, der z.B. über einen entsprechenden Funktionsparameter angegeben werden kann. Sofern die Kompatibilitätseinrichtung 15 eine Inkompatibilität feststellt, können stufenweise Teiler von 16, 32, 64 bis zu 372 verwendet werden, um entsprechend langsamere und weniger problemanfällige Datenkommunikationen auszuprobieren. Die Kompatibilitätseinrichtung 15 kann für einen auf diese Weise ermittelten Teiler eine Regel 8 in der Regeldatenbank 6 anlegen, die für die betreffende Funktion 4a den erfolgreichen Teiler vorgibt. In der Regeldatenbank 8 kann die Einsatzumgebung 2 beispielsweise durch eine eindeutige Seriennummer des Mobiltelefons 2 spezifiziert werden. Bei einem zukünftigen Einsatz der Mobilfunkkarte 1 in dem Mobilfunktelefon 2 wird dann automatisch der am besten geeignete Übertragungsparameter von der Kompatibilitätseinrichtung 15 vorgegeben.

Des Weiteren umfassen viele Mobilfunkkarten 1 einen Mikrobrowser zum Ausführen von Zusatzfunktionen 4a durch Interpretieren eines spezieller Bytecodes. Da derartige Mikrobrowser jedoch sehr komplex und mitunter fehlerhaft sind, ist es zweckmäßig, in der Regeldatenbank 6 Regeln 8 bereitzustellen, die bei einer Inkompatibilität des Mikrobrowsers bzw. der von ihm ausgeführten Zusatzfunktionen 4a mit einem Mobiltelefon 2 den Mikrobrowser deaktiviert. Damit bleiben für einen Benutzer der betreffenden Mobilfunkkarte 1 zumindest die elementaren Mobilfunkfunktionen verfügbar.

Darüber hinaus kann es für die Kompatibilitätseinrichtung 15 in manchen Fällen schwierig sein, die Inkompatibilität einer auszuführenden Funktion 4a allein anhand ihrer Ausführung zuverlässig festzustellen. Vielmehr kann eine Inkompatibilität des oben angesprochenen Mikrobrowsers z. B. auch durch Überwachen anderer, von dem Mikrobrowser abhängiger Funktionen erkannt werden. So kann die Kompatibilitätseinrichtung 15 beispielsweise zyklisch prüfen, ob nach dem Aufruf des Mikrobrowsers weiterhin eine Datenkommunikation stattfindet, z.B. im Rahmen einer Authentisierung. Sofern dies nicht der Fall ist, erkennt die Kompatibilitätseinrichtung 15, dass die Benutzung des Mikrobrowsers z. B. die Mobilfunkkarte 1 und/ oder das Mobiltelefon 2 blockiert, so dass der Mikrobrowser deaktiviert und die Mobilfunkkarte 1 neu gestartet werden muss. Eine derartige Arbeitsweise der Kompatibilitätseinrichtung 15 ist vergleichbar mit derjenigen eines "Watch Dog" bei herkömmlichen Mikrocontrollern.

## Patentansprüche

1. Verfahren zur Steuerung von Funktionsaufrufen in einem portablen Datenträger (1) im Rahmen eines Einsatzes des Datenträgers (1) in einer bestimmten Einsatzumgebung (2), **gekennzeichnet durch** die Schritte in dem tragbaren Datenträger:
- Prüfen (S4 - S7) einer Kompatibilität einer auszuführenden Funktion (4a) mit der Einsatzumgebung (2), mit den Teilschritten des Prüfens:
- Aufrufen (S4) der auszuführenden Funktion (4a) und Erhalten (S6) eines Funktionsergebnisses in Abhängigkeit von der Einsatzumgebung (2) des Datenträgers (1); und
- Feststellen (S7) einer Inkompatibilität der Funktion (4a) mit der Einsatzumgebung (2), falls das Funktionsergebnis einen Ausführungsfehler anzeigt; und
- Aufrufen (S8 - S11) einer durch eine Inkompatibilitätsroutine (4b) zu ermittelnden alternativen Funktion (fcp(p2)) des Datenträgers (1), falls beim Prüfen (S3 - S7) der Kompatibilität eine Inkompatibilität der. Funktion (4a) mit der Einsatzumgebung (2) festgestellt wird, wobei die Inkompatibilitätsroutine (4b) in der Einsatzumgebung (2) die Wirkung der inkompatiblen Funktion (4a) erbringt; und
dass nach dem Erkennen einer Inkompatibilität bei erfolgenden Aufrufen der auszuführenden, inkompatiblen Funktion (4a) anstelle der inkompatiblen Funktion (4a) unmittelbar der alternative Funktionsaufruf (4b) durchgeführt wird.

2. Verfahren nach Anspruch 1, **dadurch gekennzeichnet, dass** das Prüfen (S4 - S7) der Kompatibilität und das Aufrufen (S8 - S11) der Inkompatibilitätsroutine (4b) für eine Mehrzahl von ausführbaren Funktionen von einer zentralen Kompatibilitätseinrichtung (15) des Datenträgers (1) gesteuert wird.

3. Verfahren nach einem der Ansprüche 1 bis 2, **dadurch gekennzeichnet, dass** in dem Schritt des Aufrufens (S8 - S11) der Inkompatibilitätsroutine (4b) des Datenträgers (1) eine Liste mit alternativen Funktionsaufrufen für eine Mehrzahl von ausführbaren Funktionen verwendet.

4. Verfahren nach einem der Ansprüche 1 bis 3, **dadurch gekennzeichnet, dass** für die inkompatible Funktion (4a) ein alternativer Funktionsaufruf (4b) bestimmt wird, insbesondere unabhängig von und/ oder ohne Informationen über die Einsatzumgebung (2) des Datenträgers (1)

5. Verfahren nach Anspruch 1 bis 3, **gekennzeichnet durch,** einen Schritt des Ermittelns (S3; S8) von Informationen über die Einsatzumgebung (2) des Datenträgers (1).

6. Verfahren nach Anspruch 5, **dadurch gekennzeichnet, dass** das Ermitteln (S8) von Informationen über die Einsatzumgebung (2) ein Identifizieren einer externen Datenkommunikationsvorrichtung umfasst, mit der der Datenträger (1) beim Ausführen (S4, S5) der Funktion (4a) eine Datenkommunikationsverbindung (12) unterhält und/oder in Interaktion steht.

7. Verfahren nach Anspruch 5 oder 6, **gekennzeichnet durch,** einen Schritt des Auswählens (S3; S9, S10) einer Inkompatibilitätsroutine (4b) basierend auf den ermittelten Informationen über die Einsatzumgebung (2) des Datenträgers (1).

8. Verfahren nach Anspruch 7, **dadurch gekennzeichnet, dass** das Auswählen (S9, S10) der Inkompatibilitätsroutine (4b) durch Anwenden von in einer Regeldatenbank (6) niedergelegten Regeln (8) durchgeführt wird, die ausführbare Funktionen (4a) in Abhängigkeit von möglichen Einsatzumgebungen (2) des Datenträgers (1) mit Inkompatibilitätsroutinen (4b) verknüpfen.

9. Verfahren nach Anspruch 8, **dadurch gekennzeichnet, dass** die in der Regeldatenbank (6) niedergelegten Regeln (8) aufgrund des Prüfens (S3 - S7) der Kompatibilität einer Funktion (4a) mit einer bestimmten Einsatzumgebung (2) angepasst und/ oder ergänzt werden.

10. Verfahren nach Anspruch 8 oder 9, **dadurch gekennzeichnet, dass** die in der Regeldatenbank (6) niedergelegten Regeln (8) über einen privilegierten Wartungszugang von außerhalb des Datenträgers (1) angepasst und/ oder ergänzt werden.

11. Verfahren nach einem der Ansprüche 1 bis 10, **dadurch gekennzeichnet, dass** als Inkompatibilitätsroutine (4b) eine Alternativfunktion zu der inkompatiblen Funktion (4a) aufgerufen wird.

12. Verfahren nach Anspruch 1 bis 11, **dadurch gekennzeichnet, dass** die Funktion (4a) abhängig von einem Funktionsparameter ausgeführt wird (S4 - S6) und die Inkompatibilitätsroutine (4b) einen Alternativfunktionsparameter verwendet (S11 - S13).

13. Verfahren nach einem der Ansprüche 1 bis 12, **dadurch gekennzeichnet, dass** das Verfahren auf einer Mobilfunkkarte ausgeführt wird, die mit einem Telekommunikationsendgerät verbunden ist, das die Einsatzumgebung (2) der Mobilfunkkarte repräsentiert.

14. Portabler Datenträger (1), umfassend einen Speicher (11,12), eine Datenkommunikationsschnittstelle (10) und einen Prozessor (9) zum Ausführen einer Funktion (4a) des Datenträgers (1) im Rahmen des Einsatzes des Datenträgers (1) in einer Einsatzumgebung (2), **gekennzeichnet durch** eine zentrale Kompatibilitätseinrichtung (15) für eine Mehrzahl von unterschiedlichen Funktionen, die eingerichtet ist, eine Kompatibilität der auszuführenden Funktion (4a) mit der Einsatzumgebung (2) durch Auswerten eines Funktionsergebnisses der aufgerufenen Funktion (4a) festzustellen und die eingerichtet ist, einen durch eine Kompatibilitätsroutine (4b) zu ermittelnden alternativen Funktion (fct(p2)) auf dem Datenträger (1) aufzurufen, falls der Aufruf der Funktion (4a) mit der Einsatzumgebung (2) inkompatibel ist, wobei die Inkompatibilitätsroutine (4b) in der Einsatzumgebung (2) die Wirkung der inkompatiblen Funktion (4a) erbringt und die Kompatibilitätseinrichtung (15) eingerichtet ist, nach dem Erkennen einer Inkompatibilität bei erfolgenden Aufrufen der auszuführenden, inkompatiblen Funktion (4a) anstelle der inkompatiblen Funktion (4a) unmittelbar den Aufruf der alternativen Funktion (fct(p2)) durchführt.

15. Verfahren nach Anspruch 14, **dadurch gekennzeichnet, dass** die zentrale Kompatibilitätseinrichtung (15) für eine Mehrzahl von unterschiedlichen Funktionen deren Funktionsaufrufe prüft und nach erkannter Inkompatibilität anpasst.

16. Datenträger (1) nach Anspruch 14 oder 15, **dadurch gekennzeichnet, dass** die Kompatibilitätseinrichtung (15) als eine einem Betriebssystem (14) des Datenträgers (1) vorgeschaltete zentrale Kompatibilitätsschicht ausgestaltet ist, die die Kompatibilität aller Funktionen (4a) prüft, die bei einer Ausführung eine Wirkung auf der Einsatzumgebung (2) entfalten und/ oder mit der Einsatzumgebung (2) interagieren.

17. Datenträger (1) nach einem der Ansprüche 14 bis 16, **dadurch gekennzeichnet, dass** die Kompatibilitätseinrichtung (15) eingerichtet ist, die Kompatibilität der Funktion (4a) zu prüfen, indem die Funktion (4a) aus dem Speicher (11,12) aufgerufen wird und in Abhängigkeit von der Einsatzumgebung (2) des Datenträgers (1) durch Ausführen der Funktion (4a) mittels des Prozessors (9) ein Funktionsergebnis erzielt wird, wobei eine Inkompatibilität der Funktion (4a) mit der Einsatzumgebung (2) des Datenträgers (1) anhand eines mit dem Funktionsergebnis angezeigten Ausführungsfehlers festgestellt wird.

18. Datenträger (1) nach einem der Ansprüche 14 bis 17, **dadurch gekennzeichnet, dass** die Kompatibilitätseinrichtung (15) eingerichtet ist, den alternativen Funktionsaufruf (4b) durchzuführen, indem Informationen über die Einsatzumgebung (2) des Datenträgers (1) ermittelt werden und basierend auf den ermittelten Informationen über die Einsatzumgebung (2) der alternative Funktionsaufruf (4b) ausgewählt wird.

19. Datenträger (1) nach Anspruch 18, **dadurch gekennzeichnet, dass** der Datenträger (1) beim Ausführen der Funktion (4a) über die Datenkommunikationsschnittstelle (10) mit einer externen Datenkommunikationsvorrichtung eine Datenkommunikationsverbindung (12) unterhält und/ oder in Internaktion steht und die Kompatibilitätseinrichtung (15) eingerichtet ist, die Informationen über die Einsatzumgebung (2) zu ermitteln, indem die externe Datenkommunikationsvorrichtung über die Datenkommunikationsschnittstelle (10) identifiziert wird.

20. Datenträger (1) nach einem der Ansprüche 14 bis 19, **dadurch gekennzeichnet, dass** der alternative Funktionsaufruf eine Alternativfunktion zu der inkompatiblen Funktion (4a) ist, die in der Einsatzumgebung (2) des Datenträgers (1) die Wirkung der Funktion (4a) hat.

21. Datenträger (1) nach einem der Ansprüche 14 bis 20, **dadurch gekennzeichnet, dass** die Funktion (4a) von einem Funktionsparameter abhängig ist und die Kompatibilitätseinrichtung (15) eingerichtet ist, die Funktion (4a) mit einem Alternativfunktionsparameter aufzurufen.

22. Datenträger (1) nach einem der Ansprüche 14 bis 21, **dadurch gekennzeichnet, dass** der Datenträger (1) eine in ein Telekommunikationsendgerät eingesetzte Mobilfunkkarte ist, wobei das Telekommunikationsendgerät die Einsatzumgebung (2) der Mobilfunkkarte bildet.

## Claims

1. A method for controlling function calls in a portable data carrier (1) within the framework of a use of the data carrier (1) in a certain use environment (2), **characterized by** the steps in the portable data carrier:
- checking (S4 - S7) a compatibility of a function to be executed (4a) with the use environment (2), with the sub-steps of checking:
- calling (S4) of the function to be executed (4a) and receiving (S6) of a function result in dependence on the use environment (2) of the data carrier (1); and
- determining (S7) an incompatibility of the function (4a) with the use environment (2), if the function result indicates an execution error; and
- calling (S8 - S11) an alternative function (fcp(p2)) of the data carrier (1) to be ascertained by an incompatibility routine (4b), if, upon checking the compatibility (S3 - S7), an incompatibility of the function (4a) is determined with the use environment (2), wherein the incompatibility routine (4b) yields the effect of the incompatible function (4a) in the use environment (2); and that, after detecting an incompatibility, when calls of the incompatible function to be executed (4a) occur, the alternative function call (4b) is carried out immediately instead of the incompatible function (4a).

2. The method according to claim 1, **characterized in that** the checking (S4 - S7) of the compatibility and the calling (S8 - S11) of the incompatibility routine (4b) is controlled for a plurality of executable functions by a central compatibility device (15) of the data carrier (1).

3. The method according to any of the claims 1 to 2, **characterized in that** in the step of calling (S8 - S11) the incompatibility routine (4b) of the data carrier (1) there is employed a list of alternative function calls for a plurality of executable functions.

4. The method according to any of the claims 1 to 3, **characterized in that** an alternative function call (4b) is determined for the incompatible function (4a), in particular independently of and/or without information about the use environment (2) of the data carrier (1).

5. The method according to claim 1 to 3, **characterized by** a step of ascertaining (S3; S8) information about the use environment (2) of the data carrier (1).

6. The method according to claim 5, **characterized in that** the ascertaining (S8) of information about the use environment (2) comprises identifying an external data communication apparatus, with which the data carrier (1) maintains a data communication connection (12) and/or is in interaction with the same when executing (S4, S5) the function (4a).

7. The method according to claim 5 or 6, **characterized by** a step of selecting (S3; S9, S10) an incompatibility routine (4b) based on the ascertained information about the use environment (2) of the data carrier (1).

8. The method according to claim 7, **characterized in that** the selecting (S9, S10) of the incompatibility routine (4b) is carried out by applying rules (8) laid down in a rules database (6), which connect executable functions (4a) with incompatibility routines (4b) in dependence on possible use environments (2) of the data carrier (1).

9. The method according to claim 8, **characterized in that** the rules (8) laid down in the rules database (6) are adapted and/or supplemented on the basis of the checking (S3 - S7) of the compatibility of a function (4a) with a specific use environment (2).

10. The method according to claim 8 or 9, **characterized in that** the rules (8) laid down in the rules database (6) are adapted and/or supplemented via a privileged service access from outside the data carrier (1).

11. The method according to any of the claims 1 to 10, **characterized in that** an alternative function of the incompatible function (4a) is called as incompatibility routine (4b).

12. The method according to claim 1 to 11, **characterized in that** the function (4a) is executed (S4 - S6) in dependence on a function parameter and the incompatibility routine (4b) employs (S11 - S13) an alternative function parameter.

13. The method according to any of the claims 1 to 12, **characterized in that** the method is executed on a mobile communication card which is connected to a telecommunication terminal that represents the use environment (2) of the mobile communication card.

14. A portable data carrier (1) comprising a memory (11, 12), a data communication interface (10) and a processor (9) for executing a function (4a) of the data carrier (1) within the framework of the use of the data carrier (1) in a use environment (2), **characterized by** a central compatibility device (15) for a plurality of different functions, which is adapted to determine a compatibility of the function to be executed (4a) with the use environment (2) by evaluating a function result of the called function (4a), and which is adapted to call an alternative function (fct(p2)) on the data carrier (1) to be ascertained by a compatibility routine (4b), if the call of the function (4a) is incompatible with the use environment (2), wherein the incompatibility routine (4b) yields the effect of the incompatible function (4a) in the use environment (2) and the compatibility device (15) is adapted, after detecting an incompatibility, to carry out the call of the alternative function (fct(p2) immediately instead of the incompatible function (4a) when further calls of the incompatible function to be executed (4a) occur.

15. The method according to claim 14, **characterized in that** the central compatibility device (15) checks the function calls and adapts the same after detecting incompatibility for a plurality of different functions.

16. The data carrier (1) according to claim 14 or 15, **characterized in that** the compatibility device (15) is configured upstream of the operating system (14) of the data carrier (1) as a central compatibility layer which checks the compatibility of all functions (4a) which develop an effect in the use environment (2) and/or interact with the use environment (2).

17. The data carrier (1) according to any of the claims 14 to 16, **characterized in that** the compatibility device (15) is adapted to check the compatibility of the function (4a) by calling the function (4a) from the memory (11, 12) and, in dependence on the use environment (2) of the data carrier (1), a function result is obtained by executing the function (4a) by means of the processor, wherein an incompatibility of the function (4a) with the use environment (2) of the data carrier (1) is determined on the basis of an execution error indicated with the function result.

18. The data carrier (1) according to any of the claims 14 to 17, **characterized in that** the compatibility device (15) is adapted to carry out the alternative function call (4b) by ascertaining information about the use environment (2) of the data carrier (1) and selecting the alternative function call (4b) on the basis of the ascertained information about the use environment (2).

19. The data carrier (1) according to claim 18, **characterized in that** the data carrier (1) maintains a data communication connection (12) with an external data communication apparatus and/or is in interaction with the same via the data communication interface (10) when executing the function (4a), and the compatibility device (15) is adapted to ascertain the information about the use environment (2) by identifying the external data communication apparatus via the data communication interface (10).

20. The data carrier (1) according to any of the claims 14 to 19, **characterized in that** the alternative function call is an alternative function of the incompatible function (4a) which has the effect of the function (4a) in the use environment (2) of the data carrier (1).

21. The data carrier (1) according to any of the claims 14 to 20, **characterized in that** the function (4a) is dependent on a function parameter and the compatibility device (15) is adapted to call the function (4a) with an alternative function parameter.

22. The data carrier (1) according to any of the claims 14 to 21, **characterized in that** the data carrier (1) is a mobile communication card inserted in a telecommunication terminal, wherein the telecommunication terminal forms the use environment (2) of the mobile communication card.

## Revendications

1. Procédé de commande d'appels de fonction dans un support de données (1) portable dans le cadre d'une utilisation du support de données (1) dans un certain environnement d'utilisation (2), **caractérisé par** les étapes dans le support de données portable :
- vérification (S4 - S7) d'une compatibilité d'une fonction (4a) à exécuter avec l'environnement d'utilisation (2), comprenant les étapes partielles de la vérification :
- appel (S4) de la fonction (4a) à exécuter et obtention (S6) d'un résultat de fonction suivant l'environnement d'utilisation (2) du support de données (1) ; et
- constatation (S7) d'une incompatibilité de la fonction (4a) avec l'environnement d'utilisation (2) dans le cas où le résultat de fonction indique une erreur d'exécution ; et
- appel (S8 - S11) d'une fonction (fcp(p2)) alternative du support de données (1) à déterminer par une routine d'incompatibilité (4b), dans le cas où, lors de la vérification (S3
- S7) de la compatibilité, une incompatibilité de la fonction (4a) avec l'environnement d'utilisation (2) est constatée, cependant que la routine d'incompatibilité (4b) fournit dans l'environnement d'utilisation (2) l'effet de la fonction (4a) incompatible ; et
en ce que, après la détection d'une incompatibilité, lors d'appels se déroulant de la fonction (4a) incompatible à exécuter, au lieu de la fonction (4a) incompatible, c'est directement l'appel de fonction (4b) alternatif qui est effectué.

2. Procédé selon la revendication 1, **caractérisé en ce que** la vérification (S4 - S7) de la compatibilité et l'appel (S8 - S11) de la routine d'incompatibilité (4b) est, pour une pluralité de fonctions exécutables, commandée par un équipement central de compatibilité (15) du support de données (1).

3. Procédé selon une des revendications de 1 à 2, **caractérisé en ce que**, dans l'étape de l'appel (S8 - S11) de la routine d'incompatibilité (4b) du support de données (1), une liste d'appels de fonction alternatifs est employée pour une pluralité de fonctions exécutables.

4. Procédé selon une des revendications de 1 à 3, **caractérisé en ce que**, pour la fonction (4a) incompatible, un appel de fonction (4b) alternatif est déterminé, en particulier suivant et/ou sans des informations sur l'environnement d'utilisation (2) du support de données (1).

5. Procédé selon les revendications de 1 à 3, **caractérisé par** une étape de la détermination (S3; S8) d'informations sur l'environnement d'utilisation (2) du support de données (1).

6. Procédé selon la revendication 5, **caractérisé en ce que** la détermination (S8) d'informations sur l'environnement d'utilisation (2) comprend une identification d'un dispositif externe de communication de données avec lequel le support de données (1), lors de l'exécution (S4 - S5) de la fonction (4a), entretient une connexion de communication de données (12) et/ou est en interaction;

7. Procédé selon la revendication 5 ou 6, **caractérisé par** une étape de la sélection (S3; S9, S10) d'une routine d'incompatibilité (4b) sur la base des informations recueillies sur l'environnement d'utilisation (2) du support de données (1).

8. Procédé selon la revendication 7, **caractérisé en ce que** la sélection (S9, S10) de la routine d'incompatibilité (4b) est effectuée par l'emploi de règles (8) qui sont énoncées dans une banque de données de règles (6) et qui associent des fonctions exécutables (4a), suivant des environnements d'utilisation (2) possibles du support de données (1), avec des routines d'incompatibilité (4b).

9. Procédé la revendication 8, **caractérisé en ce que** les règles (8) énoncées dans la banque de données de règles (6) sont, en vertu de la vérification (S3 - S7) de la compatibilité d'une fonction (4a) avec un certain environnement d'utilisation (2), adaptées et/ou complétées.

10. Procédé selon la revendication 8 ou 9, **caractérisé en ce que** les règles (8) énoncées dans la banque de données de règles (6) sont, par l'intermédiaire d'un accès de maintenance privilégié, adaptées et/ou complétées depuis l'extérieur du support de données (1).

11. Procédé selon une des revendications de 1 à 10, **caractérisé en ce que**, en tant que routine d'incompatibilité (4b), une fonction d'alternative à la fonction incompatible (4a) est appelée.

12. Procédé selon les revendications de 1 à 11, **caractérisé en ce que** la fonction (4a) est exécutée (S4 - S6) suivant un paramètre de fonction, et **en ce que** la routine d'incompatibilité (4b) emploie (S11 - S13) un paramètre de fonction d'alternative.

13. Procédé selon les revendications de 1 à 12, **caractérisé en ce que** le procédé est exécuté sur une carte de téléphonie mobile reliée à un terminal de télécommunication qui représente l'environnement d'utilisation (2) de la carte de téléphonie mobile.

14. Support de données (1) portable comprenant une mémoire (11, 12), une interface de communication de données (10) et un processeur (9) pour l'exécution d'une fonction (4a) du support de données (1) dans le cadre d'une utilisation du support de données (1) dans un environnement d'utilisation (2), **caractérisé par** un équipement central de compatibilité (15) pour une pluralité de fonctions différentes, lequel est conçu pour constater une compatibilité de la fonction (4a) à exécuter avec l'environnement d'utilisation (2) par évaluation d'un résultat de fonction de la fonction appelée (4a), et qui est conçu pour appeler sur le support de données (1) une fonction (fcp(p2)) alternative à déterminer par une routine de compatibilité (4b) dans le cas où l'appel de la fonction (4a) est incompatible avec l'environnement d'utilisation (2), cependant que la routine d'incompatibilité (4b) fournit dans l'environnement d'utilisation (2) l'effet de la fonction (4a) incompatible et que l'équipement de compatibilité (15) est conçu pour, après la détection d'une incompatibilité, lors d'appels se déroulant de la fonction (4a) incompatible à exécuter, effectuer directement, au lieu de la fonction (4a) incompatible, l'appel de fonction alternative (fcp(p2)).

15. Procédé selon la revendication 14, **caractérisé en ce que** l'équipement central de compatibilité (15), pour une pluralité de fonctions différentes, vérifie leurs appels de fonction et les adapte après détection d'une incompatibilité.

16. Support de données (1) selon la revendication 14 ou 15, **caractérisé en ce que** l'équipement de compatibilité (15) est réalisé sous forme d'un couche centrale de compatibilité qui est agencée en amont d'un système d'exploitation (14) du support de données (1) et qui vérifie la compatibilité de toutes les fonction (4a) qui, lors d'une exécution, déploient un effet sur l'environnement d'utilisation (2) et/ou interagissent avec l'environnement d'utilisation (2).

17. Support de données (1) selon une des revendications de 14 à 16, **caractérisé en ce que** l'équipement de compatibilité (15) est conçu pour vérifier la compatibilité de la fonction (4a), ce qui a lieu **en ce que** la fonction (4a) est appelée à partir de la mémoire (11, 12) et, suivant l'environnement d'utilisation (2) du support de données (1), par exécution de la fonction (4a) au moyen du processeur (9), un résultat de fonction est obtenu, cependant qu'une incompatibilité de la fonction (4a) avec l'environnement d'utilisation (2) du support de données (1) est constatée à l'aide d'une erreur d'exécution indiquée avec le résultat de fonction.

18. Support de données (1) selon une des revendications de 14 à 17, **caractérisé en ce que** l'équipement de compatibilité (15) est conçu pour effectuer l'appel de fonction (4b) alternatif, ce qui a lieu **en ce que** des informations sur l'environnement d'utilisation (2) du support de données (1) sont déterminées, et que, sur la base des informations recueillies sur l'environnement d'utilisation (2), l'appel de fonction (4b) alternatif est sélectionné.

19. Support de données (1) selon la revendication 18, **caractérisé en ce que** le support de données (1), lors de l'exécution de la fonction (4a) par l'intermédiaire de l'interface de communication de données (10), entretient une connexion de communication de données (12) avec un dispositif externe de communication de données et/ou est en interaction avec lui, et **en ce que** l'équipement de compatibilité (15) est conçu pour déterminer les informations sur l'environnement d'utilisation (2), ce qui a lieu **en ce que** le dispositif externe de communication de données est identifié par l'intermédiaire de l'interface de communication de données (10).

20. Support de données (1) selon une des revendications de 14 à 19, **caractérisé en ce que** l'appel de fonction alternatif est une fonction d'alternative à la fonction incompatible (4a), qui a, dans l'environnement d'utilisation (2) du support de données (1), l'effet de la fonction (4a).

21. Support de données (1) selon une des revendications de 14 à 20, **caractérisé en ce que** la fonction (4a) dépend d'un paramètre de fonction, et **en ce que** l'équipement de compatibilité (15) est conçu pour appeler la fonction (4a) avec un paramètre de fonction d'alternative.

22. Support de données (1) selon une des revendications de 14 à 21, **caractérisé en ce que** le support de données (1) est une carte de téléphonie mobile mise en oeuvre dans un terminal de télécommunication, cependant que le terminal de télécommunication constitue l'environnement d'utilisation (2) de la carte de téléphonie mobile.
